Europäisches Patentamt

European Patent Office

Office européen des brevets

(19)

(11) Publication number: 0 080 310
A1

# EUROPEAN PATENT APPLICATION

(21) Application number: 82306045.4

(22) Date of filing: 12.11.82

(51) Int. Cl.³: B 29 C 5/02, B 29 F 5/00

(30) Priority: 14.11.81 GB 8134370

(43) Date of publication of application: 01.06.83
Bulletin 83/22

(84) Designated Contracting States: AT BE CH DE FR GB IT
LI LU NL SE

(71) Applicant: Antler Limited, Alfred Street, Bury Lancashire
BL9 9EF (GB)

(72) Inventor: Bowyer, William H., Tongham Road Runfold,
Farnham Surrey (GB)
Inventor: Bashford, David Peter, 109 Evelyn Avenue,
Ruislip Middx. HA4 8AH (GB)
Inventor: Carl, Kenneth, Crossfield Farm Gandy Lane
Healy, Rochdale Lancashire (GB)
Inventor: Green, Anthony Kenneth, Ran Bam
Street 38/12, Ra'Ananna (IL)

(74) Representative: Frankland, Nigel H. et al, FORRESTER &
BOEHMERT Widenmayerstrasse 4/I,
D-8000 München 22 (DE)

(54) **A method of forming members from thermoplastics material.**

(57) A method of forming a member of thermoplastics material is
disclosed in which a spray (11) of at least partially melted plastics
particles is created which is directed onto an appropriate surface
where the particles congeal to form either a coating on the surface
or a discrete article, such as half of a suitcase.

A method of forming members from thermoplastics material.

THE PRESENT INVENTION relates to a method of forming members from a thermoplastics material, and to members formed by such a method. The members formed by the method may be in the form of a plastics material coating applied to a substrate, or may preferably be in the form of a discrete member, such as a separate article or component.

Most prior proposed methods of forming coatings or discrete members from thermoplastics material have certain limitations, for example in the thicknesses of the material that can be obtained in the finished member. With prior methods it is often difficult or impossible to provide a "sandwich" type of construction, where layers of different materials, or layers having different properties, are superimposed. Also with prior methods it is difficult or impossible to change or modify the colours of the materials present in the product, and if the shape of a moulded product (for example an injection moulded product) has to be altered significant re-tooling costs may arise.

According to this invention there is provided a method of fabricating a discrete article, said method comprising the steps of creating a spray of at least partially molten particles of a thermoplastic material, directing said spray onto a mould defining the shape of at least one surface of the article to be fabricated, permitting the thermoplastic material to set on the mould and removing the thus fabricated discrete article from the mould.

In one embodiment said spray is created by passing said particles through a nozzle in which the particles are at least partially melted by passing through a flame, and in such a case it is preferred that said spray is created by passing said particles through said nozzle in a stream of inert gas. Alternatively said spray nozzle may be created by passing said particles through a nozzle in which the particles are at least partially melted with a flame-less application of heat. This heat may be applied to the particles in the form of radiant heat, or in the form of microwave energy that excites a molecular bond within the particles, but in both cases it is preferred that the heat be applied to the particles when they are in the form of a spray. Preferably the particles are heated to a temperature lower than the melting point of the material forming the particles before the spray is created. This may be accomplished by entraining the particles in a stream of pre-heated gas, or by heating a fluidised bed from which the particles are extracted, or by passing the stream of particles through a heated pipe, or by mixing the entrained stream of particles with a heated gas, or by mixing the entrained stream of particles with other heated particles, such as a heated particulate filler.

Preferably the method comprises the steps of spraying a plurality of superimposed layers of different characteristics in the mould.

The layers may be of different materials, or the layers may be alternate layers of non-foamed material and foamed material.

It is to be understood that particles of two or more colours may be utilised to form said spray, and also that the spray may incorporate a filler or reinforcing material. Thus, colours may be mixed within a single layer, or adjacent layers may be of differing colours.

Preferably selected regions of the fabricated article are made stronger than other regions by directing more spray to those regions, by directing a spray which has an increased quantity of reinforcing material to those regions, or by directing a spray of a different stronger material to those regions.

Advantageously fittings to be mounted on the fabricated article are first located in the mould, and the plastics material is then sprayed into the mould so that the fittings become at least partially embedded in the resultant fabricated article.

Preferably the fabrication process includes the step of treating the exposed surface of the plastics material after the spraying step. The exposed surface of the plastics material may be treated by pressing a corresponding mould part into contact with the exposed surface, directing radiant heat to the exposed surface or by directing a heated powder into contact with the exposed surface.

Preferably the method includes the steps of heating the mould prior to said spraying step, and cooling the mould after the spraying step before the fabricated article is removed from the mould. The cooling is preferably a rapid quenching, and to achieve this the mould is preferably made from a metal.

Said spray may consist of one or more of polypropylene, high and low density polyethylene, nylon, polyvinyl chloride, ethyl vinyl acetate, A.B.S., and polystyrene or any other particulate thermoplastic material.

According to another aspect of this invention there is provided a method of fabricating a member, said method comprising the steps of creating a spray of at least partially molten particles of a thermoplastic material by passing the particles through a nozzle in which the particles are at least partially melted with a flameless application of heat.

Preferably said member is a coating applied to a substrate, or a discrete article.

The mould utilised may be male or female and may be in one piece or sections made of any suitable material. For many applications the mould will not have to withstand forces or pressures of any great magnitude during the spraying on of the plastics material, and will be required virtually only to define the shape to be reproduced. For those applications at least it may be unnecessary for the mould to be made of high strength material, which is generally expensive and can be difficult and costly to form. Thus, for example, the mould may be satisfactorily made of plaster, metal, wood or other relatively cheap and readily formed materials.

Since thermoplastic materials begin to harden immediately on contact with a cooler surface, the sprayed plastics material begins to harden as soon as it is applied to the mould and thus it remains where it has been applied.

Load bearing structures may be produced by the present method.

It is possible for different plastics materials to be sprayed on to different parts of the mould, or for layers of different materials to be sprayed on to the mould, or parts of the mould. Thus, for example, different plastics may be applied to provide the product with stiff and flexible parts or areas, or with parts or areas of varying flexibility. We have not found that different melting characteristics of different plastics materials present problems in the applications of the plastics to the pattern.

A particular advantage of the present invention is that inserts, attachments or other additions of metal or other materials may readily be incorporated into the product produced from the sprayed plastics material. Such additions may be incorporated as the plastics material is sprayed on to the pattern, the additions being suitably located on the mould in the required positions either before spraying commences or in the course of building up the plastics material on the mould by spraying. The additions become embedded in the plastics material as it is sprayed on to the mould and are thus retained in position. Reinforcement, for example in the form of metal wire, strip or sheet or carbon fibre, may be applied. Preformed fittings, frames and other items are also readily applied, the plastics material being sprayed around them so that it securely retains them in position when it solidifies. Their location and retention in the plastics material may be enhanced if necessary by providing them with suitable keying formations.

Fabric materials may be incorporated in a product produced by the present method. The plastics material keys with the fabric as it is sprayed onto the fabric. The fabric may be at the surface of the product, or embedded within a wall or walls of the product. It is possible, for example, for material to be embedded behind a clear layer of sprayed plastics material to be visible through that layer.

Fillers of chalk, wood or other suitable material may be applied in the course of building up the plastics material on the pattern so as to add bulk to the finished product, or to increase the weight of the product.

The spraying on of the plastics material may be carried out by means of one or more spray devices, which may be manually controlled or robotised. To achieve differential layering, one robot may be programmed appropriately, or different robots may be responsible for respective layers. It will be appreciated that the present invention provides a very versatile method of manufacturing plastics products. The method may be applied at relatively low capital cost. Furthermore, it may be applied in the manufacture of products of a wide range of shapes and sizes. The use of thermoplastic plastics materials enables wastage of material to be kept low. Residual plastics material left by a spraying process may be re-claimed for subsequent use.

Whilst the invention is applicable to the manufacture of products of various kinds, including large vessels and containers, one application to which it readily lends itself is in the manufacture of luggage cases and attache cases. Such cases of the kind comprising opposed shells having metal frames around their mouths which mate when the case is closed may be made by the present method. Pre-formed frames, for example of extruded or die cast aluminium, for the cases can have the shells sprayed directly onto them, the thermoplastic plastics material from which the shells are built up by the spraying being selected according to the characteristics which the cases are required to have. For example, the shells may be made substantially rigid, or flexible, or parts of the shells may be rigid and other parts may be flexible. It is possible for peripheral walls of the shells, for example, to be made substantially rigid and for the side walls to be relatively flexible. Corners and edges may be strengthened by increased localised spraying of the plastics material at those parts. Different plastics material may be used at different parts, if required. Spraying the shells directly onto the frames avoids the difficulties experienced with known methods of manufacture, in which the frames and shells are formed separately and subsequently brought together. Not only can a secure connection be provided between the frames and shells but also a connection which is waterproof. Forms of frames which hitherto may not have been possible because of the restraints imposed by having to apply them after the shells had been formed, may now be possible with the application of the present invention to the manufacture of cases.

Moulded plastics frames may be used instead of metal frames. Alternatively the frames may be formed integrally with the shells by the spraying of the plastics material. Feet for supporting the cases when they are standing may be incorporated into the cases in the course of spraying on the plastics material, along with hinges, fastenings and other fittings. Materials to form linings of the cases may be incorporated as the shells are formed by the spraying. Decorative strips or panels of metal, fabric or other materials may be included then also, as can embossed items, used to impress the manufacturer's name and so on into the article. Because the embossed items may be removably inserted into the mould, a single mould can be adapted readily and cheaply to provide a wide range of finished articles.

Changes in the shape of the shells may be readily achieved because cheap easily produced moulds, for example of plaster or wood, may be used for the shells, to which modifications may be applied normally without undue difficulty. The plastics material may be changed and changes may be made in the colours of the plastics material used and in the inserts and fittings which are applied. Thus various changes can be readily and relatively cheaply to suit customer requirements.

According to another aspect of this invention there is provided an apparatus for creating a spray of at least partially molten particles of a thermoplastics material, said apparatus comprising means for entraining said particles in a stream of gas, means for creating a spray of said entrained particles, and means for applying flame-less heat to said particles.

Preferably said means for applying heat comprise radiant heating means, such as radiant means surrounding said spray, and reflector means for reflecting outwardly radiating energy into a predetermined zone of said spray. Alternatively said heating means comprise microwave heating means, adapted to resonate a molecular bond with the particles of thermoplastics material, and such means may include a waveguide encircling said spray, means to direct microwave energy into the waveguide and one or more outlets in the waveguides to direct the microwave energy to a predetermined zone in the spray.

Preferably means are provided for directing different types of material through said nozzle, such as different types of plastics material, fillers, or foaming agents.

In order that the invention may be more readily understood, and so that further features thereof may be appreciated, the invention will now be described by way of example, with reference to the accompanying drawings, in which:

FIGURE 1 is a diagrammatic part sectional view of an apparatus for creating a spray of at least partially molten thermoplastics material,

FIGURE 2 is a diagrammatic part sectional view of another embodiment of an apparatus for creating a spray of at least partially molten thermoplastics material,

FIGURE 3 is a diagrammatic part sectional view of a heater arrangement for use in an apparatus similar to that shown in Figure 2,

FIGURE 4 is a perspective diagrammatic view of a mould for use in certain methods in accordance with the invention, and

FIGURE 5 is an enlarged cross-sectional view of part of a member formed on such a mould.

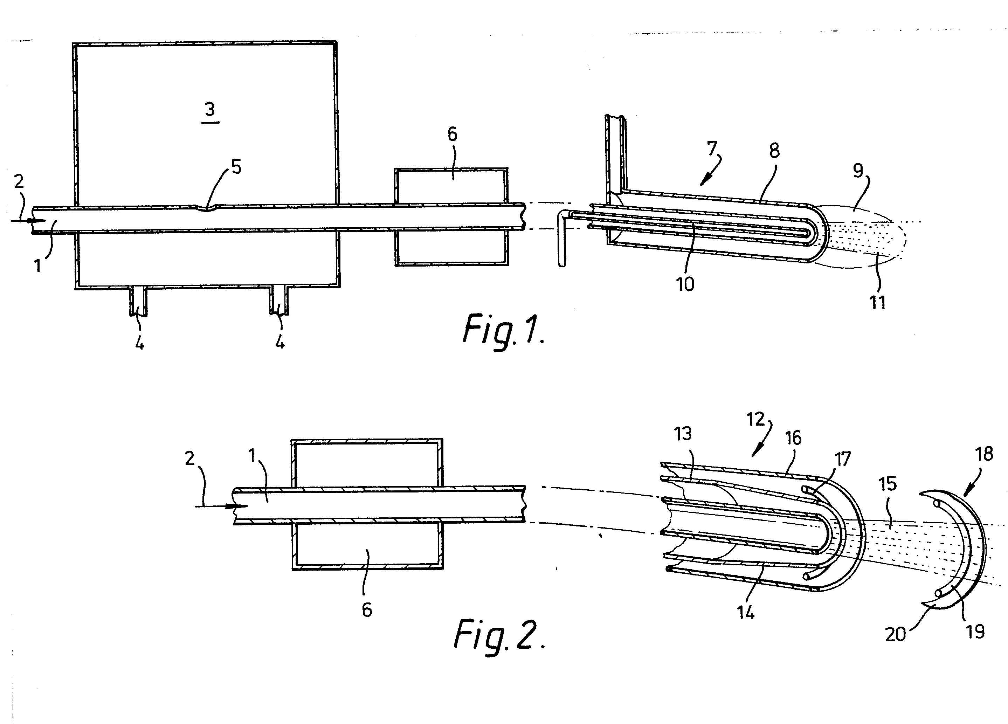

Referring initially to Figure 1 of the accompanying drawings an apparatus is illustrated which may be used to create a spray of at least partially molten particles of thermoplastics material. The apparatus comprises a pipe 1 which is connected to a source of conveying gas (not shown). The conveying gas may be air, but is preferably an inert gas such as nitrogen. A stream of conveying gas under pressure passes through the pipe 1 in the direction of the arrow 2. The pipe 1 passes through a chamber 3 which contains a fluidised bed of fine particles of a thermoplastics material. The chamber 3 is provided with inlet pipes 4 in the lower regions thereof through which a suitable pressurized gas, e.g. nitrogen, may be introduced to the chamber to maintain the fluidised bed. The pipe 1 passes through the fluidised bed, and there are one or more apertures 5 formed in the wall of the pipe so that particles from the fluidised bed become entrained in the stream of conveying gas flowing through the pipe 1.

The pipe 1 then passes through an (optional) heater 6 which serves to heat the conveying gas, and the entrained particles, to a temperature just below the melting point of the particles. The same effect can, of course, be achieved by pre-heating the conveying gas before it passes through the fluidised bed 1, or by mixing the stream of conveying gas and suspended particles with a stream of gas heated to a temperature higher than said melting point, or by heating the fluidised bed itself.

The stream of particles in pipe 1 is then introduced to a spray nozzle 7. In the spray nozzle an outer pipe 8 is provided which is co-axial with the pipe 1. A mixture of propane and oxygen is supplied to this pipe, and is ignited to create a flame 9 at the end of the spray nozzle 7. A further pipe 10 is provided in the spray nozzle 7, this pipe being co-axial with the pipe 1, but being of smaller diameter than the pipe 1. Thus the pipe 10 is located within the pipe 1. A high pressure stream of projecting gas (e.g. air or nitrogen) flows through the pipe 10, to assist in ejecting the plastics material particles from the nozzle 7 as a divergent spray 11. As the particles pass through the flame 9 the particles are heated, and at least the outer periphery of each particle becomes at least partially molten. The operating parameters of the nozzle may be such that particles of plastics material may be totally molten, or may be such that only the outer periphery of each particle is partially molten so as to be "tacky" or may be anywhere between these two extremes, depending on the precise nature of the material utilised and the member to be fabricated.

It is to be understood that the nozzle 7 has only been illustrated schematically, and many modifications may be effected to the nozzle. For example the pipe supplying the projecting gas need not be within the pipe supplying the conveying gas together with the entrained particles, but may surround that pipe. The nozzle may include appropriate deflectors to ensure that the resultant spray has the required configuration.

The use of an inert gas as the conveying gas, and as the projecting gas, has the advantage that since the plastics material particles are surrounded by an inert gas as they pass through the flame 11, oxidation of the particles as a result of the action of the flame is minimised.

Figure 2 illustrates an alternative type of spray nozzle in which there is no flame, and thus the risk of oxidation of the particles is minimised. In the nozzle 12, as in the nozzle 1, a stream of conveying gas in a pipe 1 passes through a fluidised bed similar to that shown in Figure 1 (not shown in Figure 2), and then (optionally) passes through a heater 6, which heats the conveyor gas, and the entrained particles, to a temperature just below the melting point of the particles. The heated stream in the pipe 1 then passes to the spray nozzle 12. In the spray nozzle 12 the pipe 1 is surrounded by a co-axial pipe 13, which has a tapering region 14 adjacent the end of the nozzle. A high pressure stream of projecting gas is supplied through this pipe 13 to project the plastics particles from the nozzle as a divergent spray 15. The projecting gas may be heated to assist in the melting of the particles that are ejected from the nozzle. A further pipe 16, of larger diameter than the pipe 13, but co-axial with that pipe, is provided to supply a further stream of heated gas. This pipe contains an annular heating element 17, to heat the stream of gas as it flows from the nozzle 12. The heating element 17 will have a large surface area in contact with the stream of gas, and thus may comprise a coiled-coil electric heating element, or an element with a plurality of fins to transfer heat to the stream of gas. A further heater 18 is provided in the form of an annular radiant electric heating element 19 (e.g. an infra-red radiant heating element) that surrounds the divergent spray of particles 15. An annular reflector 20 of parabolic cross section surrounds the heating element 19, and serves to focus all radiation from the heating element 19 into a predetermined zone that is traversed by the spray of plastics particles 15. Thus the plastics material particles are melted, or at least partially melted, and thus as the spray 15 leaves the nozzle it consists of at least partially molten plastics materials.

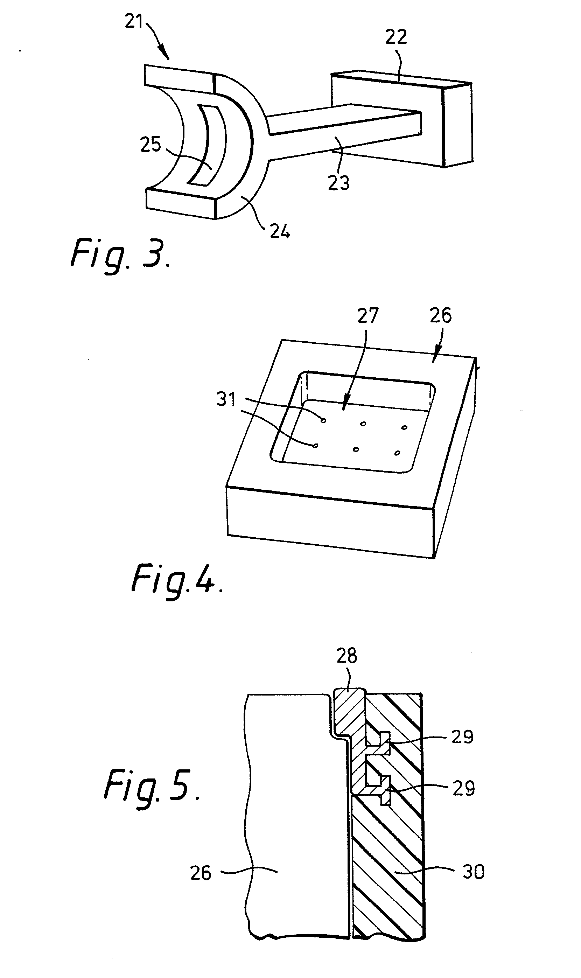

Figure 3 illustrates a heater that can be used in place of the heater 18 shown in Figure 2. The heater 21 consists of a source of microwaves, such as a klystron or magnetron, which is tuned to a resonant frequency of a molecular bond within the plastics material being utilised, such as the frequency of a C-H bond or the frequency of a C-C bond. The microwave energy is fed through a waveguide 23 to a radiating waveguide 24 in the form of an annulus which surrounds the spray of plastics particles, and which has a radiation outlet slot 25 on its innermost wall. Thus the spray of plastics particles passes through a zone which is irradiated with microwave energy of a frequency to excite a molecular bond within the molecules of the plastics particles. The particles are thus heated and melted.

Whilst the various nozzles described above have been described as producing a spray of at least partially molten plastics material particles it is to be appreciated that the nozzles may be modified to operate in various different ways, or may be caused to operate in different ways by supplying various materials to the nozzles as described.

Thus means may be provided for introducing a foaming agent to the spray of plastics material so that the spray, when directed onto a mould or other surface, will form a foamed plastics material. The foaming agent may comprise sodium bicarbonate or some other suitable material. The foaming agent may be intimately mixed with the sprayed material by initially entraining the foaming agent with the projecting stream of gas, although alternatively the foaming agent may be introduced to the nozzle through a separate pipe, and may then be mixed with the rest of the components of the spray.

Also means may be provided for introducing a filler to the spray, such as chalk, wood, or fibrous materials. The filler may be entrained with the projecting stream of gas, or may be introduced as a separate stream. The filler may be pre-heated, heat from the filler thus being transferred to the plastics material in the spray to assist in the melting of these particles. The filler may serve to reduce the costs of the raw materials necessary to fabricate a member, and especially where the filler is fibrous (e.g. short glass or carbon fibres) it will also serve to improve the properties of the fabricated member.

Two or more streams of different plastics material particles may be controllably directed to a single nozzle. Thus two or more fluidised beds of particles may be provided, each containing different particles. The particles may merely be of different size, but preferably are of different colours, or of different materials. Since the particles are controllably supplied to the nozzle it is possible to spray a member comprising superimposed layers of different materials, or superimposed layers of different colours. If particles of two different colours are supplied to the nozzle simultaneously at a constant rate a pleasing two-tone effect can be achieved. The balance of this two-tone effect can be adjusted merely by altering the ratio of the two components. Of course particles of three or more colours can be sprayed simultaneously if desired.

Figures 4 and 5 illustrate a mould 26 for use in fabricating a discrete member in the form of part of a suitcase. The mould 26 defines a recess 27, the surface of which defines the desired outer configuration of half of a suitcase. In fabricating a suitcase-half of the mould, initially an extruded metallic rim member 28 is located in position at the mouth of the mould, as shown in Figure 5. The extrusion has inwardly directed protrusions 29 to form a firm key with the plastics material element 30 that is to be fabricated. Hinge parts, and clasp and lock parts, as appropriate, are integrally formed with or are mounted on the extrusion 28.

The mould is initially heated, and then a spray of partially molten plastics material particles is directed into the recess 27 in the mould, using a nozzle as described above. The spray bonds on the mould, and congeals and solidifies to form a fabricated element of plastics material. As the thermoplastic material begins to harden immediately on contact with the mould surface, the sprayed material remains when it has been applied. If it is desired that the fabricated element should be thicker in certain areas than in other areas, then it is merely necessary to direct movement of the spray to the areas that are to be thicker. If it is desired that certain areas are to be stronger than other areas, it is only necessary to introduce more fibrous filler to the spray when it is directed to the areas where strength is required. Alternatively the nozzle may be controlled to spray a stronger, but more expensive, plastics material into the zones where strength is required in the finished product, but to spray weaker, and thus cheaper, plastics material into the remaining zones.

When the spraying process has been completed the plastics material element 30 is firmly bonded to the extrusion 28 and the associated hinge and lock parts. Optionally a heated male mould member may be provided which can be inserted into the plastics material element 30 whilst it is still in the mould 26 to provide a good quality finish to the interior of the fabricated element. Alternatively radiant heaters may be provided to re-melt the plastics material exposed in the mould, or means may be provided for spraying a heated powder onto the article in the mould, and brushing off the excess powder, to provide a desired finish to the fabricated element.

The mould is then cooled (preferably rapidly quenched, for which the mould should be of metal), and the fabricated element is ejected from the mould with ejection pins 31 provided in the base of the recess 27, or by some other convenient means. If necessary the fabricated element is trimmed, in case there has been any over-spray, and may then be assembled with a corresponding component to form a suitcase or the like. Elements made by the above process may comprise parts of a motor vehicle, such as dashboards, floor mounted consoles, parcel shelves, or even body components such as bonnets, boot lids and wings.

The mould is again heated and the production cycle is repeated. The heating of the mould may be achieved internally, for example by passing heated oil through channels in the mould or by embedding electric resistance heating wires in the mould. It is envisaged that four or more moulds may be mounted on a carousel, or otherwise mounted for movement between four stations. At the first station the mould will be heated, and at the second station the spraying and moulding process will be carried out. At the third station the mould will be cooled, and at the fourth station the fabricated element will be trimmed (if necessary), the fabricated element will be ejected from the mould, and a new extrusion 28 will be located in the mould.

It is envisaged that the spraying will be effected in a zone containing an inert atmosphere. The spraying zone will be appropriately shielded if microwave heating is utilised. The spray nozzle will be controlled by a robot. An appropriately programmed computer or microprocessor will control the robot, and will also control the nature and quantity of material that consists the spray. Any sprayed material that does not impinge on the mould will cool during its onward airborne flight and will return to the solid particulate state. These particles, when they have landed, may be re-claimed and re-utilised, thus minimising wastage of raw material.

When fabricating an element as described above, by introducing foaming agent to the spray at appropriate times, it will be possible to fabricate an element of "sandwich" type construction. Thus the walls of the fabricated element will be relatively thick, but will utilise a minimum quantity of raw material, and will thus be light, and inexpensive as regards material costs. Since the strength in flexure of a sheet is determined by the nature of the surface layers and the cube of the overall thickness of the sheet, it will be understood that a plastics material-foam-plastics material sandwich provides an optimum strength/weight ratio at relatively low material cost.

Again, when fabricating an element as described above one or more fillers may be combined with the spray, thus reducing material costs, and possibly also increasing the strength of the product. Such fillers, if pre-heated, may transfer heat to the plastics material particles.

It is possible to provide sandwich-type constructions, or multilayer constructions, wherein respective layers are formed of different types of plastics. Thus the exterior layers of such a construction may be of hardwearing or other expensive plastics materials, whereas the inner layers may be of cheaper materials.

Various particulate thermoplastics materials may be used in carrying out the present invention, for example polypropylene, high and low density polyethylene, nylon, polyvinyl chloride, ethyl vinyl acetate, A.B.S. and polystyrene. Other materials may also be found to be suitable.

Whilst the invention has been specifically described above with reference to the fabrication of discrete elements, such as components of a suitcase, it is to be understood that a spray from a nozzle such as that described with reference to Figures 2 and 3 may be utilised to form a coating on a substrate. The coating may be relatively thick, for example a coating having appropriate qualities may be formed on the underside of a vehicle as an underseal, or may be applied to the side of the door of a vehicle (and appropriately finished) to form a rubbing strip to prevent inadvertent damage to the vehicle.

A sprayed foam of the type described above may be used as an insulator in a refrigerator or freezer, and thus a method as described above may be used to make an integral lining and insulator for such a refrigerator or freezer. The method may be used to make many housings that are presently moulded from plastics materials, such as the housings for television receivers, radios, and various electrical applicances such as food mixers, hair dryers, vacuum cleaners and the like. Also many other devices such as kitchen scales, pedal bins, vases, domestic water tanks, liners for garden ponds, lampshades, and the like can be fabricated utilising methods in accordance with the invention.

CLAIMS:

1. A method of fabricating a discrete article, said method comprising the steps of creating a spray of at least partially molten particles of a thermoplastic material, directing said spray onto a mould defining the shape of at least one surface of the article to be fabricated, permitting the thermoplastic material to set on the mould and removing the thus fabricated discrete article from the mould.

2. A method according to claim 1 wherein said spray is created by passing said particles through a nozzle in which the particles are at least partially melted by passing through a flame.

3. A method according to claim 1 wherein said spray is created by passing said particles through a nozzle in which the particles are at least partially melted with a flame-less application of heat.

4. A method according to any one of the preceding claims comprising the steps of spraying a plurality of superimposed layers of different characteristics in the mould.

5. A method according to any one of the preceding claims wherein selected regions of the fabricated article are made stronger than other regions by directing more spray to those regions, by directing a spray which has an increased quantity of reinforcing material to those regions, or by directing a spray of a different stronger material to those regions.

6. A method according to any one of the preceding claims wherein fittings to be mounted on the fabricated article are first located in the mould, and the plastics material is then sprayed into the mould so that the fittings become at least partially embedded in the resultant fabricated article.

7. A method of fabricating a member, said method comprising the steps of creating a spray of at least partially molten particles of a thermoplastic material by passing the particles through a nozzle in which the particles are at least partially melted with a flameless application of heat.

8.    A method according to claim 7 in which said member is a coating applied to a substrate.

9.    An apparatus for creating a spray of at least partially molten particles of a thermoplastics material, said apparatus comprising means for entraining said particles in a stream of gas, means for creating a spray of said entrained particles, and means for applying flame-less heat to said particles.

10.    An apparatus according to claim 9 wherein said means for applying heat comprise radiant heating means.

11.    An apparatus according to claim 10 wherein said heating means comprise microwave heating means, adapted to resonate a molecular bond in the particles of thermoplastics material.

Fig.1.

Fig.2.

0080310

*Fig. 3.*

*Fig. 4.*

*Fig. 5.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 29 C 5/02 |
| Y | DE-A-2 639 484 (GEBRÜDER BÜHLER AG) <br> * Claim 1 * | 1,3 | B 29 F 5/00 |
| A | * Claim 6 ; figure * | 9 | |
| | --- | | |
| Y | US-A-4 235 943 (C.C. MCCOMAS et al.) <br> * Claims 1, 3 ; figure * | 1,3 | |
| A | | 9 | |
| | --- | | |
| Y | DE-B-2 553 089 (VEREINIGUNG ZUR FÖRDERUNG DES INSTITUTS FÜR KUNSTSTOFFVERARBEITUNG IN INDUSTRIE UND HANDWERK AN DER RHEIN. -WESTF. TECHNISCHEN HOCHSCHULE AACHEN E.V.) <br> * Claims 1, 2, 4 * | 1,3 | **TECHNICAL FIELDS SEARCHED (Int. Cl. ³)** |
| | --- | | B 05 B 7/00 |
| Y | AT-B- 256 457 (RUHRCHEMIE AG) <br> * Claim 1 * | 1 | B 29 B 3/00 <br> B 29 C 5/00 <br> B 29 C 27/00 <br> B 29 D 27/00 <br> B 29 F 5/00 |
| | --- | | |
| Y | DE-C-1 154 934 (F. ZWICK) <br> * Claims 1, 2 * | 1,3 | |
| | --- | | |
| X | US-A-4 065 057 (G.J. DURMANN) <br> * Claim 1 ; figures 1-3 * | 9,10 | |
| | --- -/- | | |

The present search report has been drawn up for all claims

| Place of search | Date of completion of the search | Examiner |
|---|---|---|
| BERLIN | 26-01-1983 | FINDELI B.F.C |

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl. ³) |
| X | DE-A-2 950 659 (E.A. LINDKVIST) <br> * Whole document * | 9 | |
| A | US-A-3 487 132 (B. THORNE) <br> * Whole document * | 1,3,11 | |
| A | DE-A-2 223 985 (E. VOGELSANG) <br> * Claim 1 * | 9 | |
| A | US-A-4 122 146 (L. BERTRANDI) <br> * Claims 1, 3, 6, 9 * | 1,5 | |
| A | BE-A- 804 524 (LA SOUDURE ELECTRIQUE AUTOGENE, PROCEDES ARCOS) | | |
| | ----- | | TECHNICAL FIELDS SEARCHED (Int. Cl. ³) |
| The present search report has been drawn up for all claims | | | |

| Place of search <br> BERLIN | Date of completion of the search <br> 26-01-1983 | Examiner <br> FINDELI B.F.C |
|---|---|---|